# EUROPÄISCHE PATENTANMELDUNG

(11) **EP 1 988 506 A2**
(43) Veröffentlichungstag der Anmeldung: **05.11.2008**
(21) Anmeldenummer: 08007749.8
(22) Anmeldetag: 22.04.2008
(51) Int. Cl.: G06T 7/00

(54) **Verfahren zur automatischen Ermittlung von Prüfbereichen, Prüfverfahren und Prüfsystem**

(30) Priorität: 03.05.2007 DE 102007021130
(71) Anmelder: Panasonic Electric Works Europe AG, 83607 Holzkirchen (DE)
(72) Erfinder: Hartl, Bernhard, 85649 Brunnthal (DE); Hofmann, Lothar, 82431 Kochel am See (DE)
(74) Vertreter: Beckord, Klaus

(57) **Zusammenfassung**

Beschrieben wird ein Verfahren zur Ermittlung von Prüfbereichen (P) für eine automatische optische Prüfung einer Anzahl von Prüfobjekten (O), bei dem jeweils der Prüfbereich (P) für ein in einem aktuellen Prüfvorgang zu prüfendes Prüfobjekt (O) unter Verwendung eines aus einer Prüfaufnahme (MPA) eines Muster-Prüfobjekts mit Hilfe eines automatischen Extraktionsverfahrens ermittelten und für nachfolgende Prüfungsvorgänge gespeicherten Muster-Prüfbereichs (MP₁, MP₂, MP₃, MP₄, MP₅) erstellt wird. Darüber hinaus wird ein Prüfverfahren zur automatischen optischen Prüfung einer Anzahl von Prüfobjekten (O) beschrieben, bei dem jeweils für ein in einem aktuellen Prüfvorgang zu prüfendes Prüfobjekt (O) eine Prüfaufnahme (PA) erfasst wird, innerhalb der Prüfaufnahme (PA) mit einem entsprechenden Verfahren ein definierter Prüfbereich (P) festgelegt wird und mit Hilfe einer Bildverarbeitungseinheit (12) eine Prüfung des Prüfobjekts (O) innerhalb des definierten Prüfbereichs erfolgt. Außerdem betrifft die Erfindung ein Prüfsystem (1) zur automatischen optischen Prüfung einer Anzahl von Prüfobjekten (O) nach einem solchen Verfahren.

## Beschreibung

Die Erfindung betrifft ein Verfahren zur Ermittlung von Prüfbereichen für eine automatische optische Prüfung einer Anzahl von Prüfobjekten. Darüber hinaus betrifft die Erfindung ein Prüfverfahren zur optischen Prüfung einer Anzahl von Prüfobjekten, bei dem jeweils für ein in einem aktuellen Prüfvorgang zu prüfendes Prüfobjekt eine Prüfaufnahme erfasst wird, innerhalb der Prüfaufnahme mit einem entsprechenden Verfahren ein definierter Prüfbereich festgelegt wird und mit Hilfe einer Bildverarbeitungseinheit eine automatische optische Prüfung des Prüfobjekts innerhalb des definierten Prüfbereichs erfolgt, d.h. beispielsweise Fehler des Prüfobjekts innerhalb des definierten Prüfbereichs gesucht werden. Außerdem betrifft die Erfindung ein Prüfsystem zur automatischen optischen Prüfung einer Anzahl von Prüfobjekten nach einem solchen Verfahren.

Mit zunehmender Automatisierung von Produktionsprozessen werden zur Prüfung der Zwischen- und/oder Endprodukte anstelle von visuellen Kontrollen durch Prüfpersonal mehr und mehr automatische optische Prüfverfahren eingesetzt. Beispiele hierfür sind die Kontrolle von Glasobjekten auf mögliche Einschlüsse, die Suche von Fehlstellen wie Lunker o. Ä. in Flanschflächen eines Motorblocks, die innerhalb eines sehr geringen Toleranzmaßes plan sein müssen, Prüfprozesse im Rahmen der Papierherstellung etc. Hierzu werden mit Hilfe einer Bildsensoreinheit, üblicherweise einer Kamera, Prüfaufnahmen der zu kontrollierenden Objekte gefertigt, die mit Hilfe von Bildverarbeitungsverfahren ausgewertet und so auf mögliche Fehler untersucht werden.

In der US 6,678,404 B1 wird beispielsweise ein Prüfverfahren beschrieben, bei dem Bilder von zu prüfenden Objekten mit Referenzbildern verglichen werden, die zuvor in einem Anlernprozess automatisch auf Basis einer Vielzahl von ausgewählten Lernbildern erstellt wurden. Dabei ist eine automatische Auswahl der Lernbilder aus Anwendungsbildern möglich, welche ein interessierendes Objekt enthalten. Hierzu wird in den Anwendungsbildern mit Hilfe eines von einem Nutzer vorgegebenen Muster-Objektbilds das interessierende Objekt gesucht.

Ein weiteres Verfahren, welches auf Basis von Lernbildern arbeitet, wird in der DE 195 21 346 beschrieben. Dabei werden aus den Lernbildern quantisierte Referenz-Merkmalsbilder extrahiert. Diese können zur Beurteilung von entsprechenden Merkmalsbildern herangezogen werden, die aus den zu prüfenden Bildern extrahiert wurden.

Bei einer automatischen Prüfung ist es in der Regel erforderlich, zunächst einen genauen Prüfbereich zu definieren, d. h. einen Bereich innerhalb der Prüfaufnahme, in dem das Objekt geprüft, insbesondere auf Fehler hin untersucht, werden soll, wobei die Definition des richtigen Prüfbereichs die Qualität der Prüfung maßgeblich beeinflussen kann. Ist der Prüfbereich zu klein, werden ggf. Fehler übersehen. Wird der Prüfbereich zu groß gewählt, so werden unnötig oft Fehlstellen erkannt und eine entsprechende Nachprüfung durch Prüfpersonal ist erforderlich, um zu hohe Ausschussraten zu vermeiden.

Zur Definition von Prüfbereichen gibt es verschiedene Möglichkeiten. Eine Variante ist die manuelle Erstellung des Prüfbereichs. Dabei werden die Prüfbereiche durch einzugebende Parameter beschrieben, z. B. ein Kreis durch seinen Mittelpunkt und seinen Radius, ein Rechteck durch die Angabe der Eckpunkte, eine Ellipse durch den Mittelpunkt sowie die Lage und die Länge der beiden Durchmesser, ein Polygonzug durch eine Liste von Polygonpunkten. Beispielsweise werden in der DE 41 30 373 A1 ein optisches Prüfverfahren und eine entsprechende Prüfeinrichtung erläutert, wobei Prüfbereiche als rechteckige Fenster festgelegt werden, aber ebenso eine freie manuelle Gestaltung der Prüfbereiche möglich ist. Auch bei dem in der EP 0 382 466 A2 beschriebenen Verfahren wird mit einem einfachen rechteckigen Prüfbereich gearbeitet.

Solche einfachen Prüfbereiche wie Kreise, Ellipsen, Rechtecke und dergleichen sind dabei relativ unkompliziert und schnell definierbar. Problematischer ist die Definition von Prüfbereichen für relativ komplexe Objekte bzw. Flächen. Hierbei muss oft eine Vielzahl von Polygonpunkten von Hand eingegeben werden, um die Form möglichst genau zu beschreiben.

Eine Alternative zur Erzeugung eines komplexen Prüfbereichs ist die Extraktion des Prüfbereichs aus der Prüfaufnahme selbst. Hierzu können beispielsweise zunächst innerhalb eines einfach vorgebbaren geometrischen Rahmens, beispielsweise eines Rechtecks oder Kreises, sämtliche Bildpunkte mit Hilfe eines Schwellwertverfahrens binarisiert werden. Das heißt, es werden alle Bildpixel daraufhin untersucht, ob sie oberhalb oder unterhalb eines vorgegebenen Schwellwerts liegen und dementsprechend auf "0" oder "1" gesetzt. Die Extraktion eines Prüfbereichs aus der Prüfaufnahme selbst birgt aber die Gefahr, dass bei der Extraktion bereits aufgrund von Fehlern im zu beurteilenden Objekt genau diese fehlerbehafteten Bereiche aus dem Prüfbereich ausgeschlossen werden. Wenn beispielsweise ein Fehler direkt an der Kante des eigentlichen Prüfbereichs auftritt, so kann es beim Schwellwertverfahren passieren, dass der Prüfbereich automatisch so gelegt wird, dass genau diese Fehlstelle aus dem Prüfbereich ausgeschlossen ist. Daher sind diese Verfahren nur bedingt einsetzbar.

Es ist eine Aufgabe der vorliegenden Erfindung, ein verbessertes benutzerfreundliches Verfahren zur Ermittlung von Prüfbereichen für eine automatische optische Prüfung von Prüfobjekten sowie ein entsprechendes Prüfverfahren und ein Prüfsystem für die automatische optische Prüfung von Prüfobjekten zu schaffen. Diese Aufgabe wird durch ein Verfahren gemäß Patentanspruch 1, ein Prüfverfahren gemäß Patentanspruch 9 sowie durch ein Prüfsystem gemäß Patentanspruch 10 gelöst.

Erfindungsgemäß wird bei dem Verfahren zur Ermittlung von Prüfbereichen für eine automatische optische Prüfung einer Anzahl von Prüfobjekten jeweils der Prüfbereich für ein in einem aktuellen Prüfvorgang zu prüfendes Prüfobjekt unter Verwendung eines aus einer Prüfaufnahme eines Muster-Prüfobjekts mit Hilfe eines automatischen Extraktionsverfahrens ermittelten und für nachfolgende Prüfungsvorgänge gespeicherten Muster-Prüfbereichs erstellt.

Bei einem solchen Verfahren ist es nicht notwendig, dass das Bedienpersonal die Prüfbereiche jeweils mühsam manuell festlegt. Stattdessen kann ein automatisches Extraktionsverfahren genutzt werden. Dabei ist aber durch die Vorgehensweise, dass die automatische Erstellung des aktuellen Prüfbereichs unter Verwendung eines Muster-Prüfbereichs erstellt wird, die Wahrscheinlichkeit von unbeabsichtigtem Ausschluss von Fehlstellen aus dem aktuellen Prüfbereich reduziert. Hierzu ist es lediglich notwendig, dass der anhand des Muster-Prüfobjekts extrahierte Muster-Prüfbereich vom Bedienpersonal kontrolliert wird. Da ein Extraktionsverfahren je nach konkretem Anwendungsfall auch relativ rechen- und zeitaufwändig sein kann, hat die Wiederverwendung des automatisch extrahierten Muster-Prüfbereichs zudem den Vorteil, dass die Geschwindigkeit der Definition des aktuellen Prüfbereichs erheblich erhöht werden kann.

Ein erfindungsgemäßes Verfahren zur automatischen Prüfung von Prüfobjekten ist dadurch gekennzeichnet, dass der Prüfbereich - vorzugsweise vollautomatisch - jeweils aktuell nach einem entsprechenden erfindungsgemäßen Verfahren unter Verwendung eines aus einer Prüfaufnahme eines Muster-Prüfobjekts automatisch extrahierten Muster-Prüfbereichs erstellt wird.

Bei einer besonders bevorzugten Variante erfolgt die Ermittlung eines Prüfbereichs dabei für ein aktuell zu prüfendes Prüfobjekt unter Verwendung eines Objekttyp-Prüfbereichs, welcher durch eine Kombination des Muster-Prüfbereichs mit anderen automatisch erstellten Muster-Prüfbereichen und/oder mit manuell erzeugten Basis-Prüfbereichen erstellt wurde. Ein manuell erzeugter Basis-Prüfbereich kann dabei ein auf einfache Weise definierter Flächenbereich wie z. B. eine Kreisfläche, ein Rechteck etc. sein. Hierdurch können sich größere Variationsmöglichkeiten bei der Erstellung von passenden Prüfbereichen ergeben. Dabei ist ein Objekttyp-Prüfbereich als eine Art komplexerer Muster-Prüfbereich für einen bestimmten zu überprüfenden Objekttyp anzusehen und kann, nachdem er einmal erstellt ist, ebenso wie ein automatisch extrahierter Muster-Prüfbereich selbst innerhalb des Prüfverfahrens eingesetzt werden. Wenn beispielsweise an einem Motorblock mehrere Flanschstellen gleichzeitig überprüft werden sollen, so kann für jede dieser Flanschstellen an einem Musterobjekt automatisch ein eigener Muster-Prüfbereich extrahiert werden. Die einzelnen Muster-Prüfbereiche können dann zu einem Objekttyp-Prüfbereich kombiniert werden, beispielsweise durch eine Vereinigung der Prüfbereichflächen. Für alle Motortypen, welche hinsichtlich dieser Flanschflächen die gleiche Geometrie und Anordnung aufweisen, kann der so erstellte Objekttyp-Prüfbereich als Ausgangsbasis zur Ermittlung eines im aktuellen Prüfvorgang jeweils benötigten Prüfbereichs verwendet werden.

Ein geeignetes Prüfsystem zur automatischen optischen Prüfung einer Anzahl von Prüfobjekten benötigt neben einer üblichen Bildsensoreinheit zur Erfassung einer Prüfaufnahme eines Prüfobjekts, beispielsweise einer CCD-Kamera, und einer Bildverarbeitungseinheit zur optischen Prüfung des Prüfobjekts, beispielsweise zur Erkennung von Fehlern, innerhalb eines definierten Prüfbereichs der Prüfaufnahme zum einen eine Speichereinheit mit einer Anzahl von Muster-Prüfbereichen, welche jeweils aus einer Prüfaufnahme eines Muster-Prüfobjekts extrahiert sind und/oder eine Anzahl von Objekttyp-Prüfbereichen, welche jeweils unter Verwendung eines Muster-Prüfbereichs erstellt sind. Zum anderen benötigt das Prüfsystem eine Prüfbereichs-Ermittlungseinheit, die so ausgebildet ist, dass ein Prüfbereich für ein in einem aktuellen Prüfvorgang zu prüfendes Prüfobjekt unter Verwendung eines gespeicherten Muster-Prüfbereichs oder Objekttyp-Prüfbereichs erstellt wird. Grundsätzlich reicht es dabei aus, wenn zur Prüfung eines bestimmten Prüfobjekts die Speichereinheit genau einen geeigneten Muster-Prüfbereich bzw. Objekttyp-Prüfbereich enthält, anhand dessen dann der Prüfbereich für den aktuellen Prüfvorgang erstellt werden kann. Als Speichereinheit des Prüfsystems ist im Übrigen jede geeignete Speichereinheit anzusehen, auf die das Prüfsystem Zugriff hat.

Die Bildverarbeitungseinheit und die Prüfbereichs-Ermittlungseinheit können zumindest zum Teil als Hardwarekomponenten ausgebildet sein. Sie sind jedoch vorzugsweise in Form von geeigneter Software realisiert. Dies ermöglicht eine einfache Nachrüstung bereits bestehender Prüfsysteme, welche entsprechende Bildsensoreinheiten und Speichereinheiten enthalten. Die Softwaremodule können beispielsweise auf einer geeigneten Rechnereinheit eines Prüfsystems implementiert sein, welche auch die benötigten Ansteuerungskomponenten für die Hardware, beispielsweise einen "Frame Grabber", zum Auslesen der Bildsensoreinheit und zur Erstellung der benötigten Bilder sowie weitere Schnittstellen zur Bedienung des gesamten Prüfsystems und zur Kontrolle der Prüfaufnahmen durch einen Bediener enthält. Die Erfindung wird daher auch durch ein Computerprogrammprodukt gelöst, welches direkt in einen Speicher einer programmierbaren Rechnereinheit eines Prüfsystems ladbar ist, mit Programmcodemitteln, um alle Schritte des erfindungsgemäßen Verfahrens auszuführen, wenn das Programm auf der Rechnereinheit ausgeführt wird.

Die Muster-Prüfbereiche bzw. die Objekttyp-Prüfbereiche können im Übrigen prinzipiell auch auf anderen Systemen erstellt und in die Speichereinheit des Prüfsystems geladen werden. Andererseits bietet es sich an, dass Prüfsystem so auszubilden, dass es selbst eine Extraktionseinheit, beispielsweise in Form eines Software-Untermoduls der Bildverarbeitungseinheit, enthält, um im Rahmen eines Musterprüfbereich-Erstellungsmodus aus einer Prüfaufnahme eines mit der Bildsensoreinheit erfassten Muster-Prüfobjekts automatisch einen Muster-Prüfbereich zu extrahieren. Vorzugsweise weist das Prüfsystem auch entsprechende Schnittstellen wie Ein- und Ausgabeeinheiten oder dergleichen auf, damit die so extrahierten Muster-Prüfbereiche in geeigneter Weise zu Objekttyp-Prüfbereichen kombiniert und bearbeitet werden können.

Weitere besonders vorteilhafte Ausgestaltungen und Weiterbildungen der Erfindung ergeben sich insbesondere aus den weiteren abhängigen Ansprüchen sowie der nachfolgenden Beschreibung. Dabei kann das erfindungsgemäße Prüfsystem auch entsprechend den abhängigen Verfahrensansprüchen weitergebildet sein.

Vorzugsweise ist es möglich, den Muster-Prüfbereich bzw. den Objekttyp-Prüfbereich jeweils - vorzugsweise vollautomatisch - an das aktuell zu prüfende Prüfobjekt anzupassen. So kann es beispielsweise sein, dass durch unterschiedliche Positionierung des Prüfobjekts relativ zur Bildsensoreinheit der während des aktuellen Prüfvorgangs benötigte Prüfbereich innerhalb der Prüfaufnahme an einer anderen Position liegt oder anders orientiert ist als der Muster-Prüfbereich bzw. der Objekttyp-Prüfbereich. Ebenso kann der aktuell erforderliche Prüfbereich gegenüber dem Muster-Prüfbereich bzw. Objekttyp-Prüfbereich vergrößert, verkleinert oder in irgendeiner Weise verzerrt sein.

Bei einem bevorzugten Verfahren kann daher der Muster-Prüfbereich oder der Objekttyp-Prüfbereich zur Anpassung an das aktuell zu prüfende Prüfobjekt innerhalb einer Prüfaufnahme des aktuell zu prüfenden Prüfobjekts verschoben werden.

Vorzugsweise ist es außerdem möglich, dass der Muster-Prüfbereich oder der Objekttyp-Prüfbereich zur Anpassung an das aktuell zu prüfende Prüfobjekt innerhalb einer Prüfaufnahme des aktuell zu prüfenden Prüfobjekts skaliert wird, d. h. beispielsweise vergrößert, verkleinert oder in sonstiger Weise verzerrt wird.

Die Anpassung des Muster-Prüfbereichs oder des Objekttyp-Prüfbereichs an das aktuell zu prüfende Prüfobjekt kann dabei vorzugsweise mit Hilfe von in der Prüfaufnahme des aktuell zu prüfenden Prüfobjekts eindeutig identifizierbaren Referenzobjekten erfolgen. Hierbei kann es sich um gesetzte Marker, aber auch um signifikante, eindeutig erkennbare Strukturen des Objekts selbst, wie Ecken, Kanten etc. handeln. Aus den Referenzobjekten können beispielsweise Referenzpunkte berechnet werden, deren Position am zu prüfenden Objekt exakt definiert ist. Es ist lediglich erforderlich, dass dem Muster-Prüfobjekt bzw. einem daraus erstellten Objekttyp-Prüfbereich ebenfalls die entsprechenden Referenzobjekte oder zumindest Informationen über deren Lage und Orientierung, Größe und/oder Form zugeordnet sind. Beispielsweise können entsprechende Muster-Referenzobjekte auch am Musterobjekt angeordnet sein und es erfolgt eine automatische Erkennung der Muster-Referenzobjekte, ggf. Berechnung von Muster-Referenzpunkten und Zuordnung dieser Daten zu dem extrahierten Muster-Prüfbereich. Ebenso können auch Referenzobjekte bzw. Referenzpunkte eventuell manuell erstellten Basis-Prüfbereichen sowie einem unter Nutzung eines Muster-Prüfbereichs erstellten Objekttyp-Prüfbereich zugeordnet werden. Durch eine Erkennung der Referenzobjekte bzw. der Berechnung der Referenzpunkte in der aktuellen Prüfaufnahme und eine Berechnung der Unterschiede zwischen den absoluten und relativen Lagen, Orientierungen, Größen und/oder Formen der Referenzobjekte bzw. Positionen der Referenzpunkte lassen sich dann automatisch geeignete Transformationsregeln ermitteln, um den Muster-Prüfbereich bzw. den Objekttyp-Prüfbereich durch eine entsprechende Skalierung, Verschiebung und/oder Orientierungsänderung an den aktuellen Prüfvorgang anzupassen.

Weiterhin ist es bevorzugt möglich, den Muster-Prüfbereich oder den Objekttyp-Prüfbereich unter Verwendung morphologischer Operatoren zu bearbeiten. Zu solchen morphologischen Operatoren gehören u. a. sogenannte Opening- und Closing-Operatoren, Dilatations-, Erosions- und Skelettierungsoperatoren. Solche morphologischen Operatoren sind dem Fachmann aus der Bildbearbeitung allgemein bekannt. Sie können beispielsweise zur Glättung oder zur Segmentierung verwendet werden. Grundsätzlich ist es auch möglich, einen Objekttyp-Prüfbereich, beispielsweise unter Verwendung eines Muster-Prüfbereichs, zu erstellen, welcher zuvor mit morphologischen Operatoren bearbeitet wurde.

Wie bereits eingangs erwähnt, können beliebige automatisch extrahierte Muster-Prüfbereiche und/oder manuell erstellte Basis-Prüfbereiche für die Erzeugung eines Objekttyp-Prüfbereichs kombiniert werden. Für eine solche Kombination gibt es verschiedenste Möglichkeiten. So kann z. B. eine Vereinigungsmenge der verschiedenen Prüfbereiche erzeugt werden. Ebenso kann eine Schnittmenge zweier Muster-Prüfbereiche bzw. Basis-Prüfbereiche erzeugt werden. Beispielsweise kann anhand eines Musterobjekts automatisch ein Muster-Prüfbereich erstellt werden und aus diesem Muster-Prüfbereich können bestimmte Bereiche ausgeschnitten werden, die manuell vorgegeben wurden. Ebenso ist es möglich, eine Differenzmenge oder eine Komplementärmenge aus den verschiedenen Prüfbereichen zu bilden. Dabei ist es weiterhin möglich, die verschiedenen Kombinationsverfahren parallel bzw. nacheinander anzuwenden, so dass z. B. auch eine symmetrische Differenz zweier Flächen gebildet werden kann, indem zunächst die Schnittmenge und dann die Komplementärmenge dieser Schnittmenge gebildet wird.

Innerhalb des erfindungsgemäßen Verfahrens können die Muster-Prüfbereiche und die Objekttyp-Prüfbereiche jeweils separat als Datenobjekte in der Speichereinheit des Prüfsystems hinterlegt werden und bei Start eines bestimmten Prüfablaufs, in dem eine bestimmte Serie von Objekten in bestimmter Weise geprüft werden soll, aufgerufen und in der jeweiligen Applikation (d. h. in dem Prüfprogramm, mit dem die bestimmte Objektserie hinsichtlich bestimmter Kriterien überprüft wird) verwendet werden. Da jedoch in vielen Fällen die Muster-Prüfbereiche oder Objekttyp-Prüfbereiche ohnehin nur für bestimmte Objekttypen verwendbar sind, die mit bestimmten Applikationen geprüft werden, werden bevorzugt Muster-Prüfbereiche und/oder Objekttyp-Prüfbereiche innerhalb der jeweiligen Applikationen in der Speichereinheit des Prüfsystems gespeichert und sind somit direkt mit der zugehörigen Applikation verknüpft.

Die Erfindung wird im Folgenden unter Hinweis auf die beigefügten Figuren anhand von Ausführungsbeispielen noch einmal näher erläutert. Hieraus ergeben sich weitere Einzelheiten und Vorteile der Erfindung. Es zeigen:
- Figur 1: ein vereinfachtes Blockschaltbild eines erfindungsgemäßen Prüfsystems mit einem grob schematisch dargestellten Prüfobjekt,
- Figur 2: ein Flussdiagramm für einen möglichen Ablauf eines erfindungsgemäßen Prüfverfahrens,
- Figuren 3a bis 3d: eine Serie von Prüfaufnahmen eines Prüfobjekts, hier eine Flanschfläche eines Motorblocks, zur Verdeutlichung der automatischen Erstellung eines Muster-Prüfbereichs und eines Objekttyp-Prüfbereichs,
- Figur 4: eine schematische Darstellung zur Erläuterung einer Erstellung eines Objekttyp-Prüfbereichs aus mehreren Muster-Prüfbereichen,
- Figur 5: ein Flussdiagramm für einen möglichen Ablauf zur Erfassung von Referenzobjekten für eine automatische Anpassung von erstellten Muster-Prüfbereichen,
- Figur 6: eine schematische Darstellung zur Verdeutlichung des Ablaufs von Figur 5,
- Figur 7: ein Flussdiagramm zur Darstellung eines möglichen Ablaufs einer Anpassung eines Muster-Prüfbereichs an eine Prüfaufnahme unter Verwendung von Referenzobjekten,
- Figur 8: eine schematische Darstellung zur Verdeutlichung des Verfahrensablaufs gemäß Figur 7.

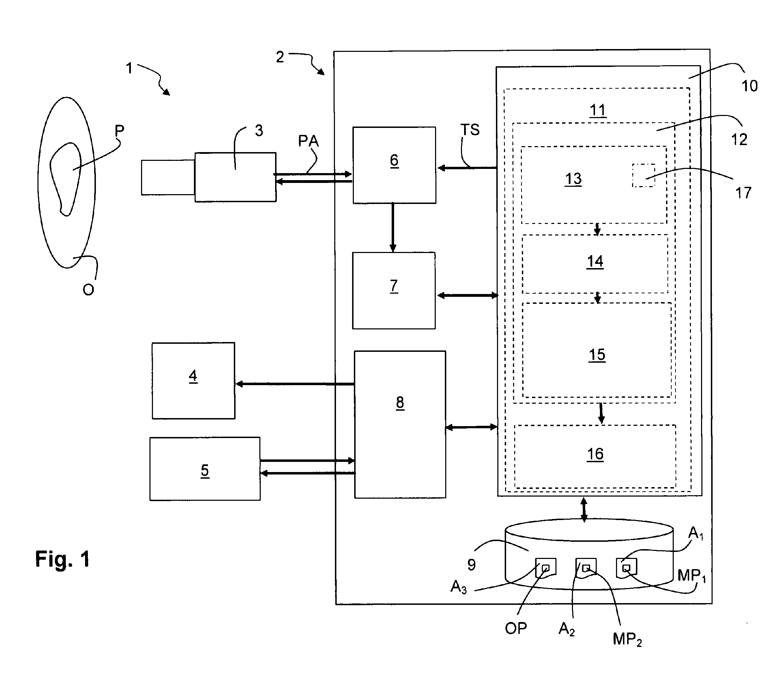

Ein zentraler Bestandteil des Prüfsystems gemäß Figur 1 ist eine Rechnereinheit 2, an welche eine CCD-Kamera 3 als Bildsensoreinheit 3 angeschlossen ist.

Während einer automatischen Prüfung von Objekten werden die Prüfobjekte O mit Hilfe einer geeigneten Positioniereinrichtung bzw. Transporteinrichtung (nicht dargestellt) an einer definierten Stelle im Aufnahmebereich der Kamera 3 positioniert. Beispielsweise kann die Kamera 3 direkt an oder über einem Transportband einer Produktionsstraße angeordnet sein.

Die Kamera 3 wird von einer Bildaufnahmeeinheit 6, beispielsweise einem sogenannten "Frame Grabber", angesteuert. Erhält dieser Frame Grabber 6 von einem Steuerprogramm, welches auf einer CPU 10 der Rechnereinheit 2 abläuft, ein Triggersignal TS, so liest der Frame Grabber 6 ein aktuell von der CCD-Kamera 3 erfasstes Bild, welches eine Prüfaufnahme PA bildet, aus und hinterlegt dieses in einem Arbeitsspeicher 7 der Rechnereinheit 2. Die CPU hat wiederum Zugriff auf diesen Arbeitsspeicher 7.

Weiter sind an die Rechnereinheit 2 über Ein-/Ausgabeschnittstellen, beispielsweise übliche COM-Schnittstellen (ein serieller Schnittstellentyp), LPT-Schnittstellen (ein paralleler Schnittstellentyp) oder andere digitale Input- und/oder Output-Schnittstellen, welche hier als ein Schnittstellenblock 8 dargestellt sind, ein Monitor 4 und ein oder mehrere Eingabegeräte 5, beispielsweise eine Maus, ein Keyboard etc., angeschlossen. Auch die Ein-/Ausgabeschnittstellen 8 sind mit der CPU 10 verbunden. Außerdem besitzt die Rechnereinheit 2 einen Permanentspeicher 9, beispielsweise einen Festplattenspeicher 9, auf welchen die CPU 10 ebenfalls Zugriff hat.

In Form von Softwaremodulen ist auf der CPU 10 der Rechnereinheit 2 u. a. eine Prüfeinheit 11 in Form eines Programms mit einer graphischen Benutzeroberfläche implementiert. Bestandteil dieser Prüfeinheit 11 ist eine Bildverarbeitungseinheit 12, welche wiederum als Untermodule eine Prüfbereichermittlungseinheit 13, eine Bildvorverarbeitungseinheit 14 und eine Fehlererkennungseinheit 15 umfasst. Außerdem umfasst die Prüfeinheit 11 auch eine Nachverarbeitungseinheit 16.

Die Prüfbereichs-Ermittlungseinheit 13 dient dazu, um mit dem erfindungsgemäßen Verfahren, welches nachfolgend anhand der weiteren Figuren noch detaillierter erläutert wird, Prüfbereiche für bestimmte Prüfvorgänge an bestimmten Prüfobjekttypen zu generieren bzw. automatisch zu ermitteln. Hierzu weist die Prüfbereichsermittlungseinheit 13 u. a. eine Extraktionseinheit 17 auf, mit welcher in einem Musterprüfbereich-Ermittlungsmodus aus einer Prüfaufnahme eines Muster-Prüfobjekts ein Muster-Prüfbereich automatisch extrahiert werden kann. Hierzu wird vor der Kamera 3 ein Muster-Prüfobjekt positioniert, vorzugsweise genau in der gleichen Position, wie auch später die eigentlich zu prüfenden Prüfobjekte positioniert werden. Bei dem Muster-Prüfobjekt kann es sich im Übrigen auch selbst um ein zu prüfendes Prüfobjekt, beispielsweise das erste Prüfobjekt, handeln.

Der im Rahmen des Musterprüfbereich-Ermittlungsmodus aus der Prüfaufnahme des Muster-Prüfobjekts automatisch extrahierte Muster-Prüfbereich kann dann weiterbearbeitet werden und mit manuell erstellten Basis-Prüfbereichen bzw. weiteren automatisch extrahierten Muster-Prüfbereichen kombiniert werden, um so einen Objekttyp-Prüfbereich für bestimmte komplexe Objekte zu erzeugen. Diese Muster-Prüfbereiche oder Objekttyp-Prüfbereiche können dann im Rahmen bestimmter Applikationen, welche eine Prüfung eines ganz bestimmten Objekts bzw. von Objekten eines bestimmten Objekttyps erlauben, im Speicher 9 hinterlegt werden. Dargestellt sind hier drei Applikationen A₁, A₂, A₃, welche jeweils einen bestimmten Muster-Prüfbereich MP₁, MP₂ bzw. Objekttyp-Prüfbereich OP enthalten.

Während der späteren Prüfung von Objekten - d. h. im eigentlichen Prüfmodus - dient diese Prüfbereich-Definitionseinheit 13 dazu, die vorgegebenen und wieder vom Speicher 9 eingelesenen Muster-Prüfbereiche MP₁, MP₂ bzw. Objekttyp-Prüfbereiche OP an die aktuelle Prüfaufnahme PA anzupassen, indem der Muster-Prüfbereich MP₁, MP₂ bzw. Objekttyp-Prüfbereich OP nachpositioniert und/oder skaliert wird, sofern dies erforderlich ist.

Es wird dann die Prüfaufnahme mit dem darin definierten Prüfbereich an die Bildvorverarbeitung 14 weitergegeben, welche die Prüfaufnahme zumindest im Prüfbereich mit Hilfe von Grauwert-Operatoren und morphologischen Operatoren je nach Bedarf für die vorgesehene Prüfung glättet, Kanten hervorhebt etc.

Anschließend erfolgt dann in der Fehlererkennungseinheit 15 je nach der in der jeweiligen Applikation vorgegebenen Prüfaufgabe die Ermittlung der zu kontrollierenden Merkmale des Prüfobjekts, wie z. B. ein Vergleich der Bilder mit Musterbildern, eine Ermittlung von Abmessung von Kanten oder die Inspektion von Oberflächen innerhalb des definierten Bildbereichs zur Erkennung der Position und Lage eventueller Fehler.

In der Nachverarbeitungseinheit 16 werden die erkannten Fehler und/oder Maßabweichungen ausgewertet. Beispielsweise können Ergebnisse von Fehlererkennungen verschiedener Prüfbereiche untereinander verknüpft werden. So kann z. B. die Gesamtfläche der gefundenen Fehler berechnet werden. Weiterhin kann das Ergebnis bewertet werden. Im einfachsten Fall findet eine Gut-/Schlecht-Bewertung statt, je nach Anzahl der gefundenen Fehler und vorgegebenen Grenzwerten. Weiterhin ist diese Nachverarbeitungseinheit auch für eine Ausgabe der Ergebnisse verantwortlich, d. h. dass beispielsweise eine Produktionsanlage so gesteuert wird, dass ein für schlecht befundenes Prüfungsobjekt automatisch ausgesondert und/oder eine Warnmeldung an einen Bediener ausgegeben wird.

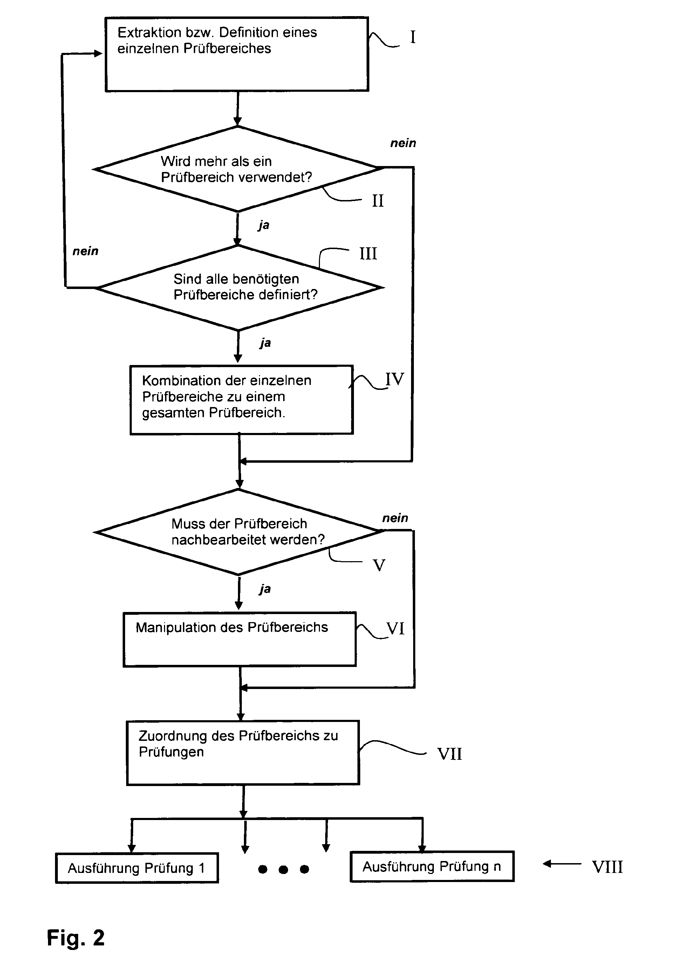

Figur 2 zeigt einen möglichen Verfahrensablauf zur Erstellung eines Musterprüfbereichs bzw. Objekttypprüfbereichs.

In Schritt I wird zunächst ein einzelner Muster-Prüfbereich unter Verwendung einer bestimmten Extraktionsmethode ermittelt.

In einem weiteren Schritt 11 wird dann geklärt, ob mehr als ein Muster-Prüfbereich verwendet wird. Dies kann beispielsweise zuvor von einem Bediener festgelegt worden sein.

Ist dies der Fall, so wird in einem nächsten Schritt III zuerst geprüft, ob alle benötigten Prüfbereiche definiert sind. Wenn nicht, wird wieder in den Schritt I zurückgesprungen und ein weiterer Muster-Prüfbereich extrahiert oder, sofern benötigt, manuell ein Basis-Prüfbereich definiert. Diese Schleife wird so lange fortgesetzt, bis alle benötigten Muster-Prüfbereiche und ggf. Basis-Prüfbereiche festliegen. Anschließend werden die einzelnen Muster-Prüfbereiche bzw. Basis-Prüfbereiche im Schritt IV zu einem gesamten Objekttyp-Prüfbereich kombiniert, mit dem dann weitergearbeitet wird.

Wurde im Schritt II bereits festgestellt, dass nur ein Prüfbereich verwendet wird, so dient dieser extrahierte Muster-Prüfbereich im Folgenden als Objekttyp-Prüfbereich und kann genauso wie bei einer Kombination von mehreren Muster-Prüfbereichen und Basis-Prüfbereichen zu einem Objekttyp-Prüfbereich bei der späteren Prüfung innerhalb der jeweiligen Applikation als Ausgangsbasis für die Erstellung eines aktuellen Prüfbereichs verwendet werden.

Zuvor wird jedoch noch im Schritt V abgefragt, ob eine Nachbearbeitung des Prüfbereichs erforderlich ist. Wenn ja, erfolgt im Schritt VI eine Manipulation des Prüfbereichs mittels geeigneter Operatoren, beispielsweise mit Hilfe von morphologischen Operatoren, wie sie eingangs bereits erwähnt wurden.

Anschließend erfolgt im Schritt VII eine Zuordnung des Muster-Prüfbereichs bzw. Objekttyp-Prüfbereichs zu beliebig vielen und unterschiedlichen Applikationen, in denen der betreffende Muster-Prüfbereich bzw. Objekttyp-Prüfbereich verwendbar ist.

Schritt VIII stellt dann eine Ausführung der jeweiligen Prüfungen mit dem erstellten Muster-Prüfbereich bzw. Objekttyp-Prüfbereich dar. Dabei können beliebige Prüfungen zu beliebigen Zeitpunkten unter Nutzung des erstellten Muster-Prüfbereichs bzw. Objekttyp-Prüfbereichs durchgeführt werden.

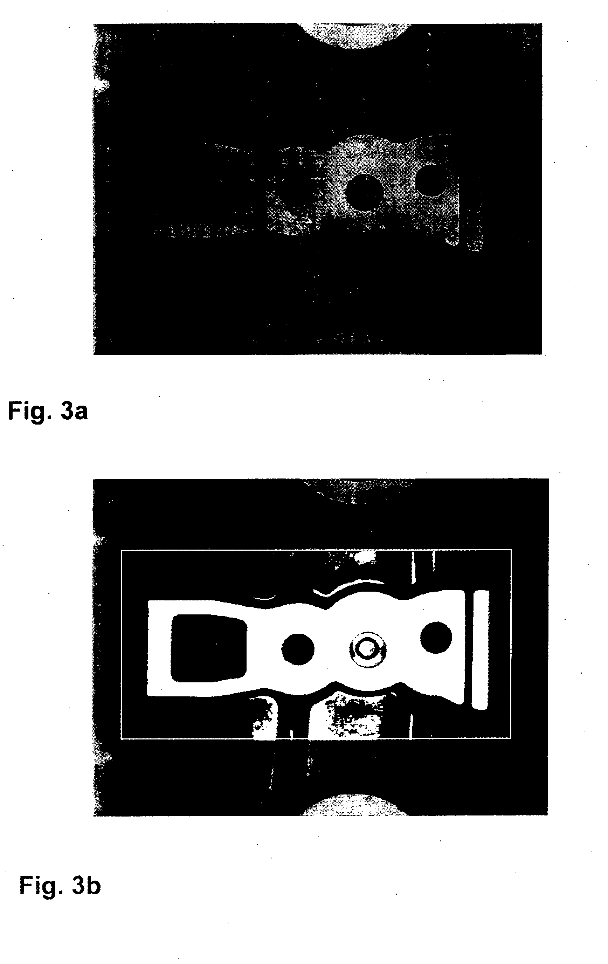

In den Figuren 3a bis 3c ist ein Beispiel für die Erstellung eines Objekttyp-Prüfbereichs für eine Flanschfläche eines Motorblocks dargestellt, der für die Prüfung verschiedenster Motorblöcke mit entsprechend ähnlichen Flanschflächen verwendet werden kann.

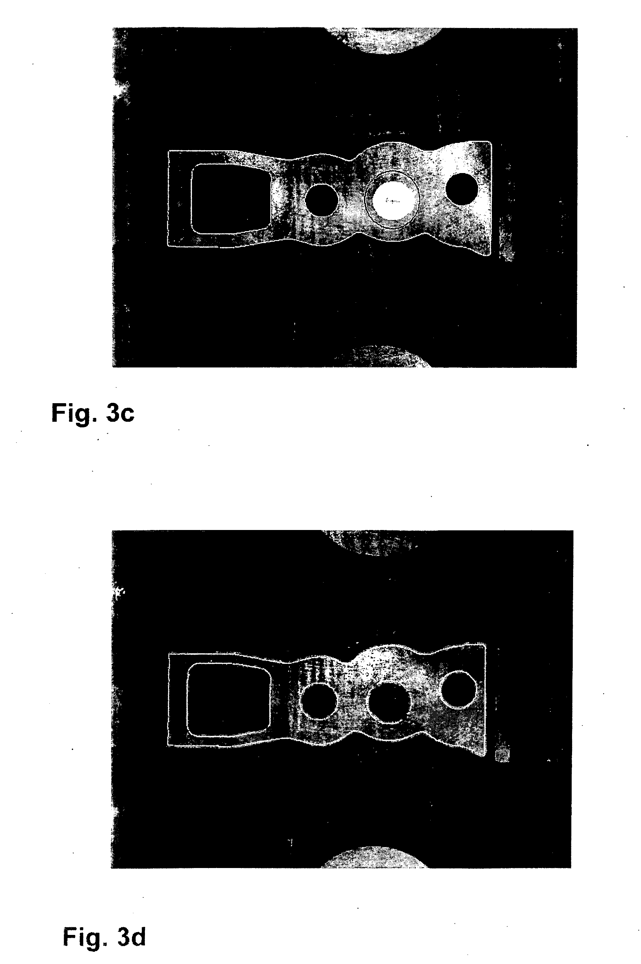

Figur 3a zeigt dabei eine Prüfaufnahme bzw. einen Bildausschnitt einer Prüfaufnahme des zu prüfenden Objekts, welche den zu prüfenden Bereich, hier die betreffende Flanschfläche, zeigt. Zur Definition eines genauen Muster-Prüfbereichs durch Extraktion aus dieser Prüfaufnahme wird zunächst die zu prüfende Fläche innerhalb eines vorgegebenen rechteckigen Rahmens binarisiert, wie dies in Figur 3b dargestellt ist. Dabei werden alle Bildpixel, welche oberhalb eines bestimmten Schwellenwerts liegen, auf einen bestimmten ersten Wert, beispielsweise auf "1", gesetzt. Alle anderen Pixel werden innerhalb dieses Rahmens auf einen anderen Wert, beispielsweise den Wert "0", gesetzt (oder bleiben unverändert). Es wird dann die größte zusammenhängende Fläche innerhalb dieses binarisierten Bilds ermittelt. Dies ist der in Figur 3c durch die weiße Linie angegebene Bereich. Störend ist hierbei noch der Bereich einer Sackbohrung in der Mitte, welcher nicht zum Prüfbereich gehören soll. Daher wird in einem weiteren Schritt innerhalb eines in Figur 3c durch den schwarzen Kreis um die Sackbohrung herum markierten Bereichs ein zweiter Muster-Prüfbereich für die Sackbohrung extrahiert, indem für alle Bildpunkte innerhalb des vorgegebenen Kreises wieder ein Binarisierungsverfahren mit einem weiteren Schwellwert eingesetzt wird. Der so ermittelte zweite Muster-Prüfbereich für die Sackbohrung kann durch Subtraktion mit dem in den ersten Schritten ermittelten großen Muster-Prüfbereich kombiniert werden. Nach der Kombination der beiden Muster-Prüfbereiche liegt dann der zu untersuchende Objekttyp-Prüfbereich vor. Da an den Übergangsflächen zwischen bearbeiteter Flanschfläche und der übrigen Gussfläche des Motors in der Regel Rauheiten vorliegen, die fälschlicherweise als Fehler erkannt werden könnten, kann der Prüfbereich verkleinert werden. Dies kann durch die Anwendung eines morphologischen Operators, beispielsweise eines Erosionsoperators, realisiert werden. Figur 3d zeigt anhand der eingezeichneten weißen Linien den verkleinerten Objekttyp-Prüfbereich, innerhalb dessen nun mit dem geeigneten Bildbearbeitungsalgorithmus eine Fehlstelle erkannt werden kann.

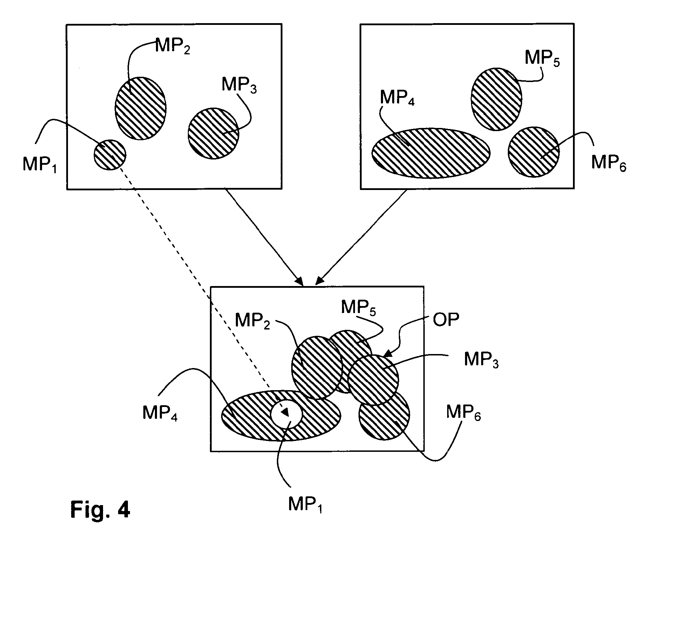

Figur 4 zeigt schematisch, wie aus einer Vielzahl von automatisch extrahierten Muster-Prüfbereichen MP₁, MP₂, MP₃, MP₄, MP₅, MP₆ ein sehr komplexer Objekttyp-Prüfbereich OP erstellt werden kann. Aus den Muster-Prüfbereichen MP₄, MP₁ wird eine Differenzmenge gebildet, d. h. ein Prüfbereich mit den Abmessungen des Muster-Prüfbereichs MP₁ wird aus dem Muster-Prüfbereich MP₄ ausgeschnitten. Dann werden der so definierte, kombiniert Prüfbereich und die Muster-Prüfbereiche MP₂, MP₃, MP₅, MP₆ passend zueinander positioniert und die Vereinigungsmenge gebildet.

Die einzelnen Prüfbereiche können dabei mittels verschiedenster Methoden festgelegt sein, wobei sie insbesondere automatisch extrahiert sein können. Die einzelnen Muster-Prüfbereiche können wie dargestellt aus verschiedenen Prüfaufnahmen extrahiert worden sein. Ebenso können zusätzlich auch manuell erstellte einfache Basis-Prüfbereiche genutzt werden. Zur Kombination der beliebig vielen einzelnen Ausgangs-Prüfbereiche, d. h. Muster-Prüfbereiche oder Basis-Prüfbereiche, können diese auf beliebige Weise miteinander kombiniert werden, z. B. durch Vereinigungsmengenbildung, Schnittmengenbildung, Differenzmengenbildung, symmetrische Differenzmengenbildung, Komplementärmengenbildung etc.

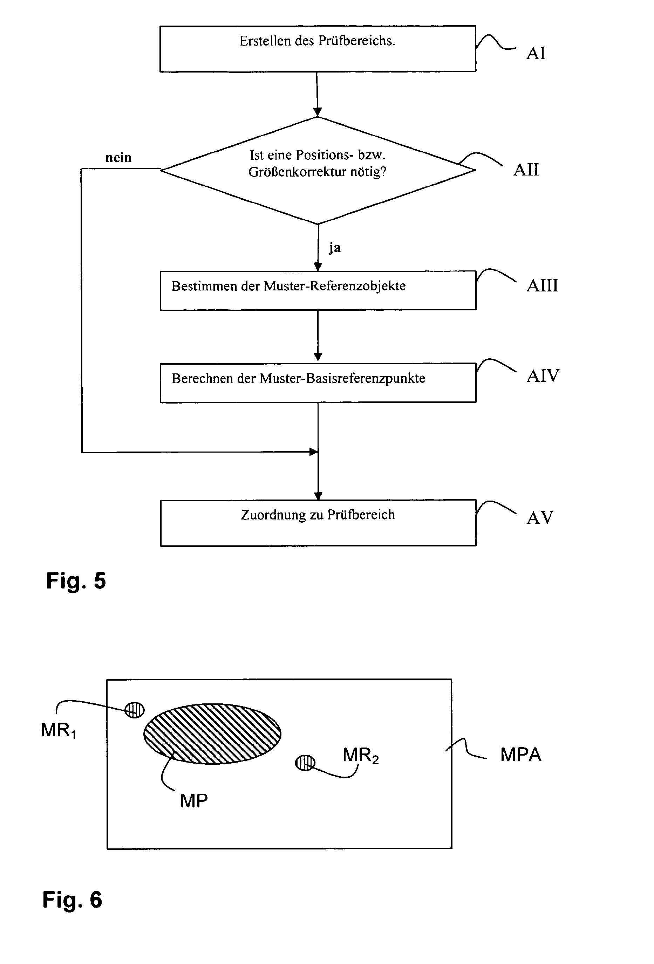

Anhand der Figuren 5 bis 8 wird im Folgenden erläutert, wie mit Hilfe von Referenzobjekten eine automatische Anpassung der Muster-Prüfbereiche bzw. des Objekttyp-Prüfbereichs an die aktuelle Prüfobjektaufnahme erfolgen kann. Hierzu ist es zunächst erforderlich, dass den einzelnen Muster-Prüfbereichen bzw. dem Objekttyp-Prüfbereich geeignete Referenzpunkte zugeordnet sind.

Dazu kann zunächst eine Erstellung des Muster-Prüfbereichs bzw. Objekttyp-Prüfbereichs erfolgen, was in Figur 5 als Schritt Al dargestellt ist. Hierbei kann es sich um eine übliche Erstellung des Muster-Prüfbereichs bzw. Objekttyp-Prüfbereichs handeln, wie er bereits oben anhand der Schritte I bis VI der Figur 2 beschrieben wurde. Es wird bei dieser Variante jedoch beispielsweise durch eine Bediener-Abfrage geprüft, ob ggf. für spätere Prüfungsvorgänge eine Positions-, Orientierungs- oder Größenkorrektur benötigt wird. Wird dies bejaht, so werden innerhalb der Muster-Prüfaufnahme MPA Referenzobjekte MR₁, MR₂ bestimmt (Schritt AIII). Dies ist schematisch in Figur 6 dargestellt. Hier sind neben dem Muster-Prüfbereich MP in einer Bilderkennung, welche die Muster-Prüfaufnahme MPA bearbeitet und den Muster-Prüfbereich MP automatisch extrahiert, zwei Muster-Referenzobjekte MR₁, MR₂ erkannt worden. Dabei kann es sich beispielsweise um Markierungspunkte handeln, die an genau definierten Stellen in das Prüfobjekt eingebracht oder auf dem Prüfobjekt angebracht sind. Es kann sich aber auch um die Erkennung von anderen signifikanten Merkmalen handeln, beispielsweise bestimmten Ecken und Kanten des Prüfobjekts, welche leicht erkennbar sind und sich immer an einer definierten Position in einer bestimmten Lage befinden.

Mit Hilfe dieser Muster-Referenzobjekte (MR₁, MR₂), werden dann im Schritt AIV Muster-Referenzpunkte, beispielsweise als Schwerpunkte oder Mittelpunkte der Referenzobjekte o. Ä., berechnet, die im Schritt AV dem jeweiligen Muster-Prüfbereich bzw. dem Objekttyp-Prüfbereich zugeordnet und auch entsprechend in der jeweiligen Applikation mit hinterlegt werden.

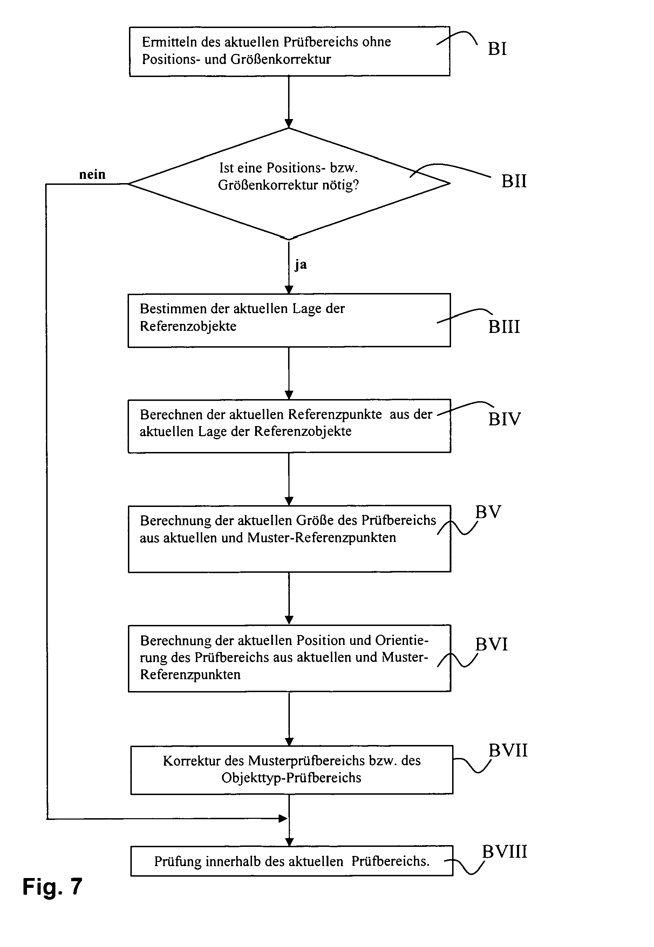

Anschließend erfolgt dann eine Ausführung der Prüfung, wie dies im Schritt VIII, Figur 2 dargelegt ist, wobei hier jeweils eine Anpassung des Muster-Prüfbereichs bzw. Objekttyp-Prüfbereichs an das aktuelle Prüfungsobjekt bzw. dessen Prüfaufnahmen erfolgen kann. Dies ist in Figur 7 schematisch dargestellt. Zunächst wird in einem Schritt BI der Prüfbereich ohne Positions- und Größenkorrektur in der jeweiligen Applikation bestimmt bzw. der hinterlegte Prüfbereich, der für die jeweilige Prüfung benötigt wird, geladen. Anschließend wird geprüft, ob eine Positions- bzw. Größenkorrektur erforderlich ist. Dies kann beispielsweise durch Eingabe eines entsprechenden Befehls eines Bedieners erfolgen. Vorzugsweise erfolgt aber in einer Vorab-Analyse der Prüfaufnahme, z. B. auf Basis von Hell/Dunkelflächen, eine automatische Festlegung, ob eine Korrektur erforderlich ist. Im Zweifelsfall wird eine entsprechende Positions-, Orientierungs- und Größenkorrektur durchgeführt bzw. im Rahmen dieser geprüft, inwiefern eine Korrektur nötig ist.

Es wird dann im Schritt BIII in der Prüfaufnahme nach der Lage der Referenzobjekte gesucht. Das heißt, es erfolgt eine Bilderkennung in der aktuellen Prüfaufnahme, um die Referenzobjekte zu suchen.

Sind die Referenzobjekte gefunden, so wird im Schritt BIV die Lage der aktuellen Referenzpunkte aus der aktuellen Lage der Referenzobjekte berechnet. Aus einem Vergleich der aktuellen Lage der Referenzpunkte mit den mit dem Muster-Prüfbereich bzw. Objekttyp-Prüfbereich hinterlegten Muster-Referenzpunkten kann dann im Schritt BV die aktuelle Größe des Prüfbereichs berechnet werden. Weiterhin kann im Schritt BVI eine Berechnung der aktuellen Position und Orientierung des Prüfbereichs auf Basis der aktuellen Referenzpunkte und der hinterlegten Muster-Referenzpunkte erfolgen. Anschließend erfolgt dann im Schritt BVII eine Korrektur des Muster-Prüfbereichs bzw. des Objekttyp-Prüfbereichs mit Hilfe der berechneten Werte bzw. der damit ermittelten Abbildungsvorschrift. Schließlich kann dann im Schritt BVIII die eigentliche Prüfung innerhalb des festgelegten aktuellen Prüfbereichs durchgeführt werden.

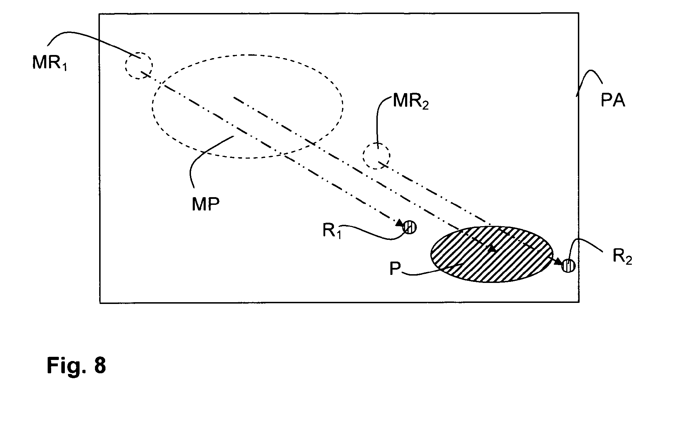

Figur 8 zeigt schematisch, wie eine Verschiebung und Skalierung des Muster-Prüfbereichs MP anhand der gefundenen Muster-Referenzobjekte MR₁, MR₂ erfolgen kann. Diese sind innerhalb der aktuellen Prüfaufnahme PA durch gestrichelte Linien dargestellt. Die Punkte R₁ und R₂ geben jeweils die in der aktuellen Prüfaufnahme gefundenen Referenzobjekte an. Wie hier zu sehen ist, kann durch die relative Lage der Referenzobjekte R1, R2 und deren Abstand sowie durch Kenntnis der Positionen der Muster-Referenzobjekte MR₁, MR₂ die genaue Positionsverschiebung und eine eventuelle Orientierungsänderung und Größenveränderung detektiert werden, und es kann dann der Muster-Prüfbereich MP so verschoben und skaliert werden, dass er exakt dem aktuell erforderlichen Prüfbereich P entspricht.

Es wird abschließend noch einmal darauf hingewiesen, dass es sich bei dem in den Figuren dargestellten System sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verfahren zur Ermittlung von Prüfbereichen (P) für eine automatische optische Prüfung einer Anzahl von Prüfobjekten (O), bei dem jeweils der Prüfbereich (P) für ein in einem aktuellen Prüfvorgang zu prüfendes Prüfobjekt (O) unter Verwendung eines aus einer Prüfaufnahme eines Muster-Prüfobjekts mit Hilfe eines automatischen Extraktionsverfahrens ermittelten und für nachfolgende Prüfungsvorgänge gespeicherten Muster-Prüfbereichs (MP, MP₁, MP₂, MP₃, MP₄, MP₅) erstellt wird.

2. Verfahren nach Anspruch 1, **dadurch gekennzeichnet, dass** die Ermittlung eines Prüfbereichs (P) für ein aktuell zu prüfendes Prüfobjekt (O) unter Verwendung eines Objekttyp-Prüfbereichs (OP) erfolgt, welcher durch eine Kombination des Muster-Prüfbereichs (MP₁, MP₂, MP₃, MP₄, MP₅) mit anderen automatisch erstellten Muster-Prüfbereichen (MP₁, MP₂, MP₃, MP₄, MP₅) und/oder mit manuell erzeugten Basis-Prüfbereichen erstellt wurde.

3. Verfahren nach Anspruch 1 oder 2, **dadurch gekennzeichnet, dass** der Muster-Prüfbereich (MP) oder der Objekttyp-Prüfbereich (OP) zur Anpassung an das aktuell zu prüfende Prüfobjekt (0) innerhalb einer Prüfaufnahme (PA) des aktuell zu prüfenden Prüfobjekts verschoben wird .

4. Verfahren nach einem der vorhergehenden Ansprüche, **dadurch gekennzeichnet, dass** der Muster-Prüfbereich (MP) oder der Objekttyp-Prüfbereich (OP) zur Anpassung an das aktuell zu prüfende Prüfobjekt innerhalb einer Prüfaufnahme (PA) des aktuell zu prüfenden Prüfobjekts skaliert wird.

5. Verfahren nach einem der vorhergehenden Ansprüche, **dadurch gekennzeichnet, dass** die Anpassung des Muster-Prüfbereichs (MP) oder des Objekttyp-Prüfbereichs (OP) an das aktuell zu prüfende Prüfobjekt (0) mit Hilfe von in der Prüfaufnahme (PA) des aktuell zu prüfenden Prüfobjekts (0) eindeutig identifizierbaren Referenzobjekten (R₁, R₂) erfolgt.

6. Verfahren nach einem der vorhergehenden Ansprüche, **dadurch gekennzeichnet, dass** der Muster-Prüfbereich (MP, MP₁, MP₂, MP₃, MP₄, MP₅) oder der Objekttyp-Prüfbereich (OP) unter Verwendung morphologischer Operatoren bearbeitet wird.

7. Verfahren nach einem der Ansprüche 2 bis 6, **dadurch gekennzeichnet, dass** die Kombination von Muster-Prüfbereichen (MP₁, MP₂, MP₃, MP₄, MP₅) und/oder Basis-Prüfbereichen zur Erstellung eines Objekttyp-Prüfbereichs (OP) eine Vereinigungsmengenbildung und/oder eine Schnittmengenbildung und/oder eine Differenzmengenbildung und/oder eine Komplementärmengenbildung umfasst.

8. Verfahren nach einem der vorhergehenden Ansprüche, **dadurch gekennzeichnet, dass** der Muster-Prüfbereich (MP₁, MP₂) und/oder Objekttyp-Prüfbereich (OP) innerhalb einer Applikation (A₁, A₂, A₃) gespeichert werden.

9. Verfahren zur optischen Prüfung von Prüfobjekten (O), bei dem jeweils für ein in einem aktuellen Prüfvorgang zu prüfendes Prüfobjekt (0) eine Prüfaufnahme (PA) erfasst wird, innerhalb der Prüfaufnahme (PA) ein Prüfbereich festgelegt wird und mit Hilfe einer Bildverarbeitungseinheit (12) eine automatische optische Prüfung des Prüfobjekts (O) innerhalb des definierten Prüfbereichs (P) erfolgt, **dadurch gekennzeichnet, dass** ein Prüfbereich (P) eines aktuell zu prüfenden Prüfobjekts (O) jeweils mit einem Verfahren gemäß einem der Ansprüche 1 bis 8 ermittelt wird.

10. Prüfsystem (1) zur optischen Prüfung einer Anzahl von Prüfobjekten (O), mit
- einer Bildsensoreinheit (3) zur Erfassung einer Prüfaufnahme (PA) eines Prüfobjekts (O),
- einer Bildverarbeitungseinheit (12) zur automatischen optischen Prüfung des Prüfobjekts (O) innerhalb eines definierten Prüfbereichs (P) der Prüfaufnahme (PA),
**gekennzeichnet durch**
- eine Speichereinheit (9) mit einer Anzahl von Muster-Prüfbereichen (MP₁, MP₂), welche jeweils aus einer Prüfaufnahme eines Muster-Prüfobjekts extrahiert sind, und/oder einer Anzahl von Objekttyp-Prüfbereichen (OP), welche jeweils unter Verwendung eines Muster-Prüfbereichs erstellt sind,
- eine Prüfbereichsermittlungseinheit (13), welche so ausgebildet ist, dass ein Prüfbereich (P) für ein in einem aktuellen Prüfvorgang zu prüfendes Prüfobjekt (O) unter Verwendung eines gespeicherten Muster-Prüfbereichs (MP₁, MP₂) oder Objekttyp-Prüfbereichs (OP) erstellt wird.

11. Prüfsystem nach Anspruch 10, **gekennzeichnet durch** eine Extraktionseinheit (17), um aus einer Prüfaufnahme eines Muster-Prüfobjekts automatisch einen Muster-Prüfbereich (MP₁, MP₂) zu extrahieren.

12. Computerprogrammprodukt, welches direkt in einen Speicher einer programmierbaren Rechnereinheit (2) eines Prüfsystems (1) ladbar ist, mit Programmcode-Mitteln, um alle Schritte eines Verfahrens nach einem der Ansprüche 1 bis 9 auszuführen, wenn das Programm auf der Rechnereinheit (2) ausgeführt wird.
